# EUROPEAN PATENT SPECIFICATION

(11) **EP 0 469 995 B1**
(45) Date of publication and mention of the grant of the patent: **04.10.1995**
(21) Application number: 91402149.8
(22) Date of filing: 31.07.1991
(51) Int. Cl.: B62M 23/02

(54) **Electrically operated vehicle**
Elektrisch betätigtes Fahrzeug
Véhicule actionné électriquement

(30) Priority: 02.08.1990 JP 205593/90; 11.10.1990 JP 272940/90; 11.10.1990 JP 272941/90; 08.03.1991 JP 43877/91
(43) Date of publication of application: 05.02.1992
(73) Proprietor: HONDA GIKEN KOGYO KABUSHIKI KAISHA, Minato-ku, Tokyo (JP)
(72) Inventor: Kawashima, Yoshinori, c/o KABUSHIKI KAISHA, Wako-shi, Saitama (JP); Hojo, Atsuo, c/o KABUSHIKI KAISHA, Wako-shi, Saitama (JP); Ryu, Masayoshi c/o KABUSHIKI KAISHA, Wako-shi, Saitama (JP)
(74) Representative: Dubois-Chabert, Guy

(56) References cited:
- FR-A- 1 048 048
- FR-A- 2 180 709
- US-A- 3 937 291
- US-A- 4 618 019

## Description

This invention relates to a two-wheeled or three-wheeled electrically operated saddle type vehicle, and more particularly to an electrically operated saddle type vehicle wherein an electric motor is suspended on a body frame and opposed to a front wheel so that a driving wind may be introduced to the electric motor to cool the electric motor.

An electrically operated saddle type vehicle carries an electric motor and a battery thereon, and driving occurs in supplying power from the battery to the electric motor. In such electrically operated saddle type vehicles, since the electric motor and battery have great weights and besides the battery has a large volume, mounting of the electric motor and the battery on a body frame is subject to positional restriction.

Conventionally, in such electrically operated saddle type vehicles, a hanger member is suspended on a body frame and a battery is placed at a front portion of the hanger member while an electric motor is placed at a rear portion of the hanger member and the electric motor is disposed such that an output power shaft thereof may be located in a coaxial relationship with a pivot shaft, as disclosed, for example, in the official gazette of Japanese Utility Model Laid-Open Application N° 51-80848.

However, that electrically operated saddle type vehicle has a problem that, since the battery is located forwardly of the electric motor, the cooling performance for the electric motor is deteriorated thereby.

The present invention has been made in view of the problem described above and provides an electrically operated saddle type vehicle which can achieve improvement in cooling performance of an electric motor.

An electrically operated saddle type vehicle of the present invention corresponds to the subject-matter of claim 1. FR-A-582 287 corresponds to the preamble of this claim. The motor is supported on a lower beam of the frame and the batteries are on the sides of the rear wheel. FR-A-2 180 709 describes a saddle type vehicle where the batteries precede the motor.

In the electrically operated saddle type vehicle according to the present invention, since the electric motor is disposed so that the front portion thereof is opposed to the front wheel, a driving wind can collide directly with the electric motor to cool the electric motor and the cooling performance of the electric motor can be improved.

This invention further relates to a power transmitting mechanism having a wrapping connector.

In the vehicle exposed in JP-U-51-80848, a driving sprocket wheel is securely mounted on the output power shaft of the electric motor while a driven sprocket wheel is securely mounted on the rear wheel, and a chain is stretched between the sprocket wheels to interconnect the electric motor and the rear wheel.

However, in order to change the speed of the vehicle, the speed of rotation of the electric motor must be controlled, and there is a problem that it is difficult to operate the electric motor always in a high efficiency and power is unnecessarily consumed.

Although it can be considered that the problem described above can be solved by assembling a transmission mechanism to the electric motor and changing the speed of rotation of the electric motor by means of the transmission mechanism, since an assembly of the electric motor and the power transmission mechanism is increased in size and also in weight, it is forecast that its layout is difficult.

It is another object of the present invention to provide a driving apparatus for an electrically operated vehicle which is easy in layout and can operate an electric motor in a high efficiency.

The power transmitting mechanism then comprises a transmission for changing the speed of rotation of said electric motor and a wrapping connector for transmitting the power of the electric motor to the driving wheel to drive it, the electric motor and the transmission are assembled integrally to each other and suspended at a lower portion of a body frame, and the electric motor and the transmission are disposed so that a straight line interconnecting a rotary shaft of the electric motor and an output power shaft of the transmission may extend substantially in parallel to the body frame as viewed in side elevation.

Since the electric motor and the transmission are assembled integrally to each other and disposed at the lower portion of the body frame, a location of the center of gravity at a low position can be achieved. Further, they are disposed so that the straight line interconnecting the rotary shaft of the electric motor and the output power shaft of the transmission may extend substantially in parallel to the body frame as viewed in side elevation, a dead spacing below the body frame can be utilized effectively and a layout can be achieved easily.

If now a swing arm is mounted for rocking motion around a pivot shaft on the body frame by means of the pivot shaft and the driving wheel is supported on the swing arm and besides the output power shaft of the transmission and the pivot shaft are disposed in a coaxial relationship to each other and a driving wheel of the wrapping connector is securely mounted on the output power shaft of the transmission, variation in tensile force of an endless transmitting member of the wrapping connector can be reduced upon bounding or rebounding of the driving wheel.

Further, if the electric motor and the transmission are disposed so that the electric motor is located forwardly on the vehicle, the electric motor can be cooled effectively by the wind.

If the motor is of the compulsive air cooling type with a fan built in it, there is no trouble in functioning and freedom for arranging the motor is increased.

A high torque must be outputted by the electric motor, which must be energized with a high current so that great thermal energy is generated. The electric motor is exposed to be thermally fatigued.

A further object of the present invention is to provide a cooling apparatus which can effectively cool an electric motor.

A cooling water passageway is therefore provided for the electric motor together with a pump supplying cooling water to the cooling water passageway.

Heat of the electric motor is absorbed by the cooling water supplied from the pump to the cooling water passageway.

In the following, embodiments of the present invention will be described with reference to the drawings.

Figs 1 and 2 show a first embodiment of an electrically operated saddle type vehicle according to the present invention, Fig. 1 is a side elevational view and Fig. 2 is a sectional view of essential part.

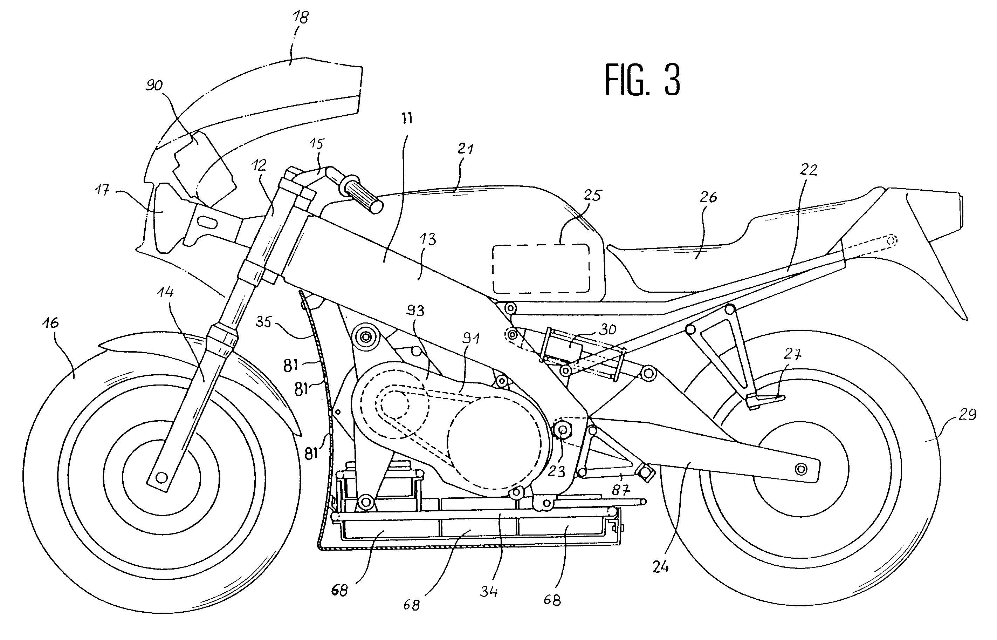

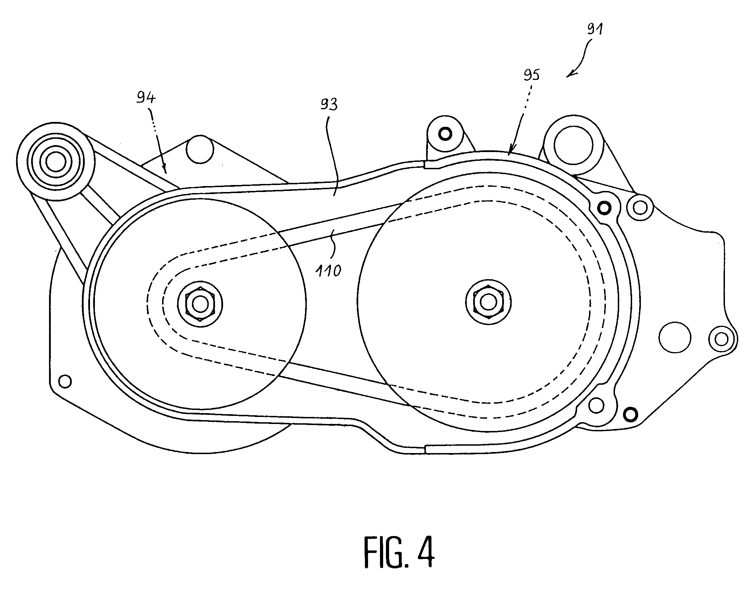

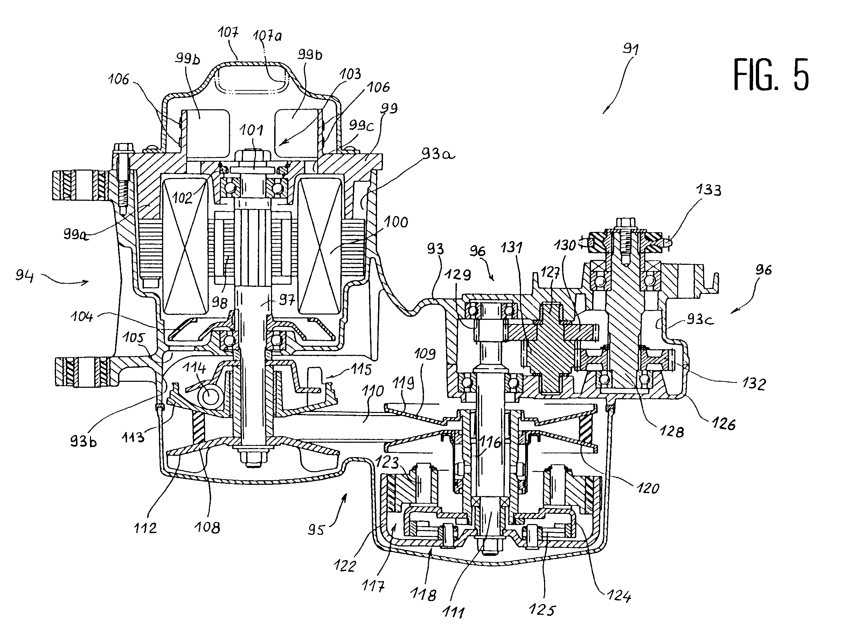

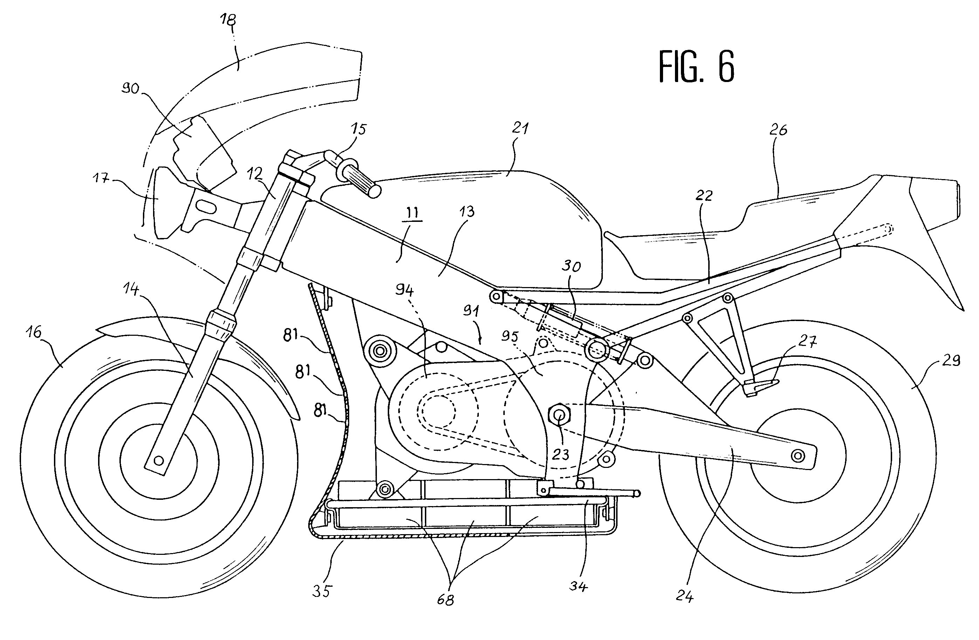

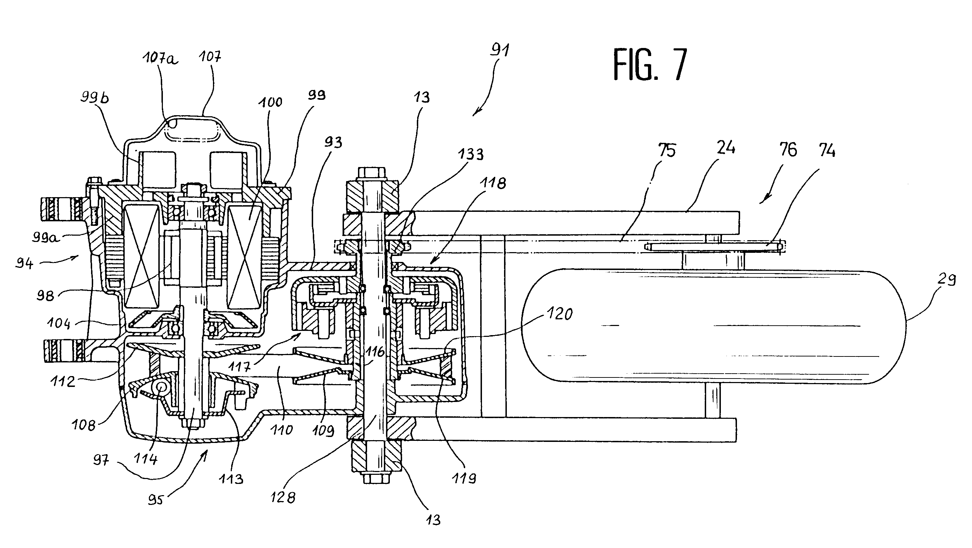

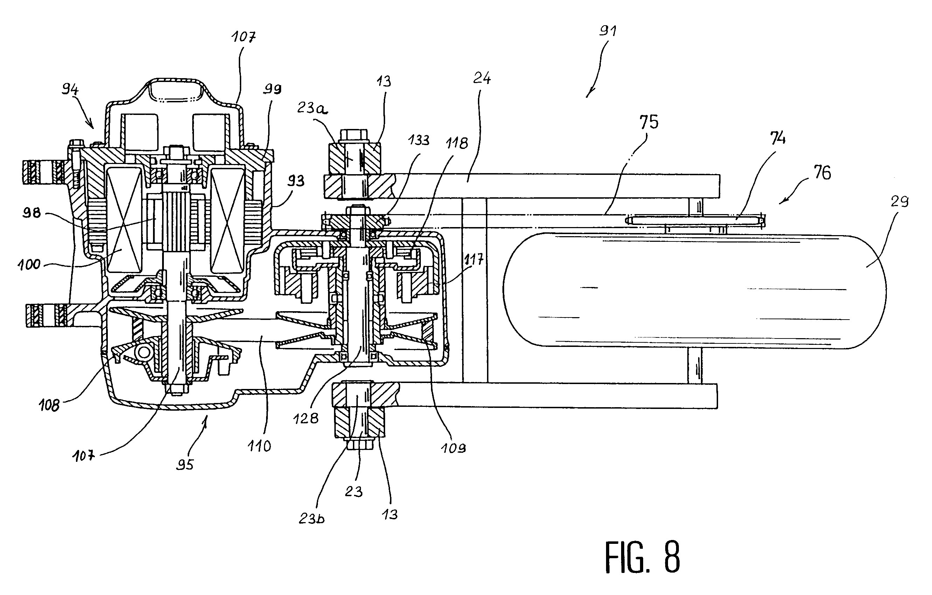

Figs. 3 to 5 show a driving apparatus for an electrically operated two-wheeled vehicle according to another embodiment of the present invention, and Fig. 3 is a side elevational view of an electrically operated two-wheeled vehicle, Fig. 4 is an enlarged side elevational view of an essential part, and Fig. 5 is a sectional view of this essential part. Figs. 6 and 7 show another embodiment of the present invention, and Fig. 6 is a side elevational view of an electrically operated two-wheeled vehicle, and Fig. 7 is a sectional view of essential part. Fig. 8 is a sectional view of essential part of a driving apparatus for an electrically operated two-wheeled vehicle according to a further embodiment of the present invention.

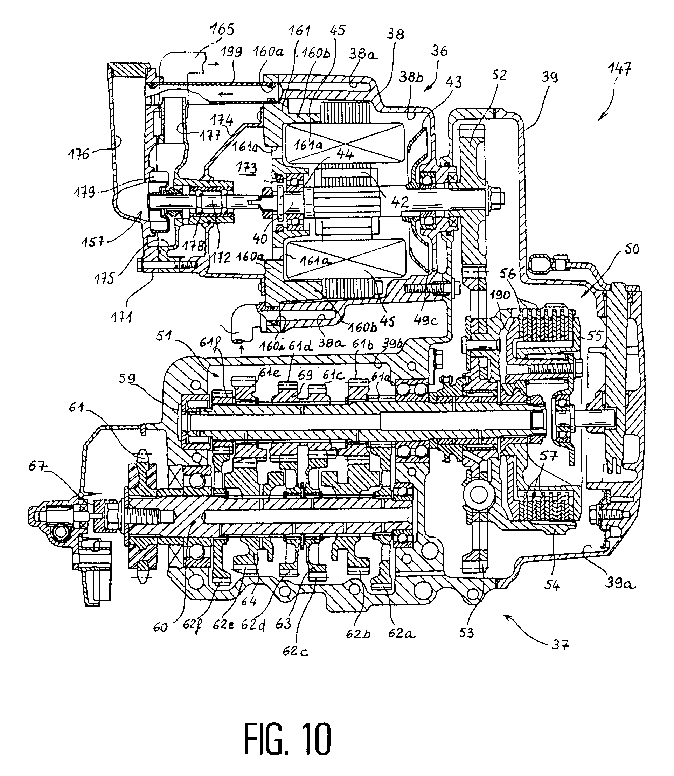

Figs. 9 and 10 show a cooling apparatus for an electrically operated vehicle according to another embodiment of the present invention, and Fig. 9 is a side elevational view of an electrically operated two-wheeled vehicle, and Fig. 10 is a sectional view of essential part.

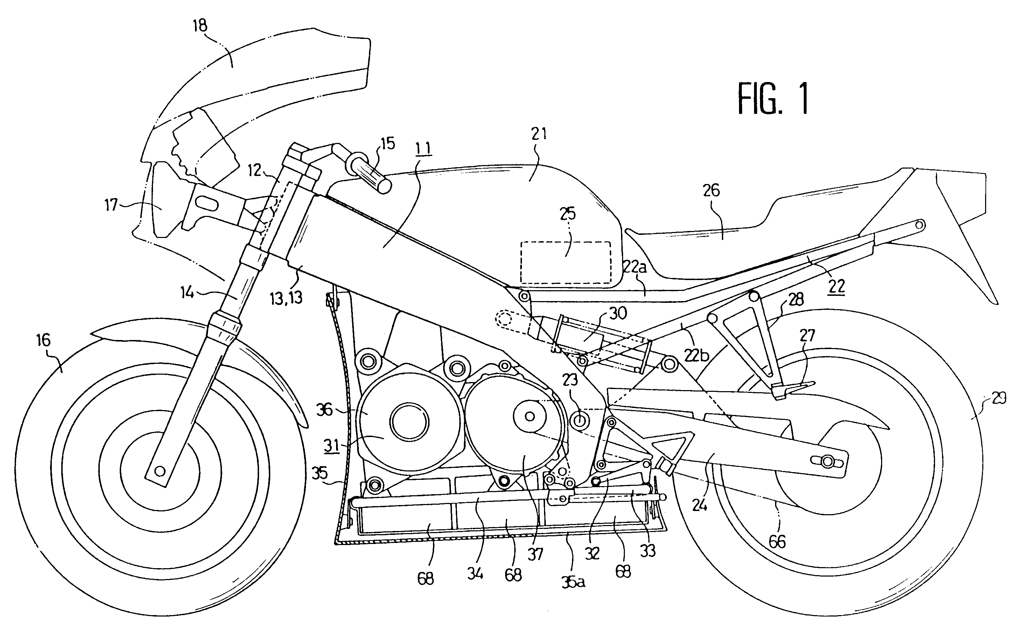

Referring to Fig. 1 reference numeral 11 denotes a body frame, and the body frame 11 is constituted such that a pair of left and right main frames 13, 13 are securely mounted at front ends thereof on a head tube (mounting portion) 12 and extend obliquely rearwardly downwards and a cross member not shown is provided between the main frames 13, 13. A front fork (front wheel supporting member) 14 is supported for steering operation on the head tube 12, and a steering handle 15 is provided at an upper portion of the front fork 14 while a front wheel 16 is supported at a lower portion of the front fork 14. It is to be noted that reference numeral 17 denotes a head lamp, and 18 a wind screen.

A box 21 is placed at upper portions of the main frames 13, 13 and a seat frame 22 extends rearwardly at an intermediate location below the box 21 while a pivot shaft (mounting portion) 23 is provided at lower portions of rear ends of the main frames 13, 13 and a swing arm (rear wheel supporting member) 24 is mounted for rocking motion on the pivot shaft 23 and extends rearwardly. The box 21 is formed such that at least part thereof may be opened, and a controller 25 for the control of an electric motor is disposed in the box 21 while an article accomodating section (not shown) for tools or similar articles is defined in the box 21. The seat frame 22 is constituted such that a pair of left and right seat rails 22a, 22a having front ends connected to the main frames 13, 13 and a pair of left and right seat stays 22b, 22b having front ends connected to the main frames 13, 13 are connected at rear ends thereof to each other in such a manner as to form a triangular frame as viewed in side elevation. A seat 26 is placed at an upper portion of the seat frame 22 while a pillion step 27 is provided at an intermediate portion of the seat frame 22 by a stay 28. A rear wheel 29 connected to a power unit 31 which will be hereinafter described is supported at a rear end of the swing arm 24, and a cushion unit 30 is interposed between the swing arm 24 and the main frames 13. It is to be noted that reference numeral 32 denotes a speed change pedal, and 33 denotes a stand.

Meanwhile, the power 31 and a battery frame 34 are suspended at lower portions of the main frames 13, 13, and the power unit 31 and battery frame 34 are surrounded by a cover 35. The battery frame 34 has a substantially cage-like configuration and is suspended at a lower portion of the power unit 31. A plurality of batteries 68, 68, 68 wired in parallel or in series to each other are carried on the battery frame 34, and the batteries 68 are connected to the aforementioned controller 25 and an electric motor of the power unit 31. The cover 35 has a substantially L-shaped profile as viewed in side elevational section and is mounted at front and rear portions of an upper portion thereof on the main frames 13 and a front and rear portions of a lower portion thereof on the battery frame 34. A wind introducing hole (not shown) is formed at a front portion of the cover 35 in an opposing relationship to the power unit while a wind discharging hole 35a is formed at a lower rear portion of the cover 35.

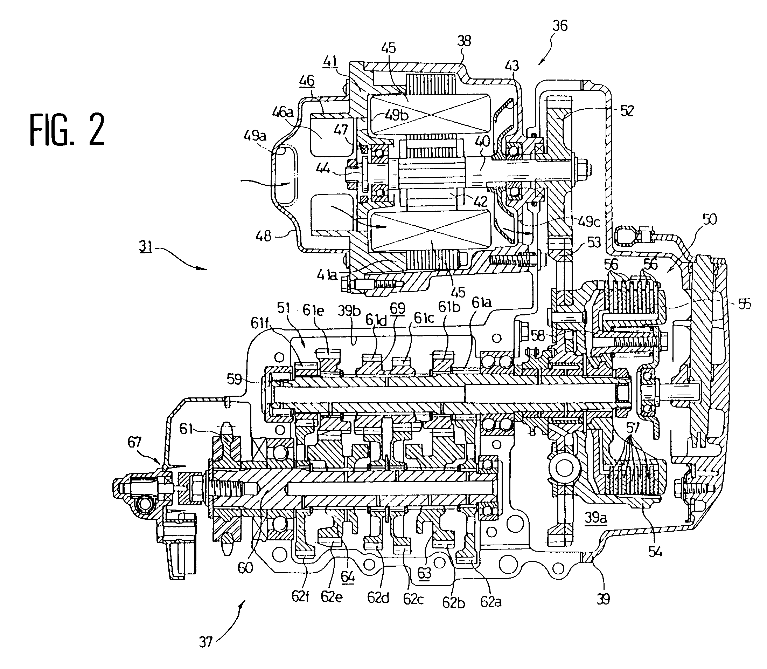

The power unit 31 is constructed such as a brushless dc electric motor 36 and a transmission 37 are assembled to each other as shown in Fig. 2. The electric motor 36 is constituted such as a bottomed cylindrical motor case 38 which is opened at a left end and closed at a right end thereof is secured to a transmission case 39 of the transmission 37 and a rotary shaft 40 extends through and is supported for rotation on the closed end of the motor case 38, and a stator housing 41 substantially in the form of a disk is securely mounted at the open end of the motor case 38 to close the opening while a left end of the rotary shaft 40 is supported for rotation on the stator housing 41. A permanent magnet 42 constituting a rotor is securely mounted at a substantially central portion of the rotary shaft 40, and a fan 43 is securely mounted at a portion of the rotary shaft 40 rightwardly of the permanent magnet 42 adjacent the closed end of the motor case 38 while a magnet 44 having a plurality of magnetic poles for the detection of rotation is securely mounted at an end portion of the rotary shaft 40 which extends outwardly of the stator housing 41. The rotary shaft 40 extends at a right end thereof into the transmission case 39 and a drive gear 52 is securely mounted at the right end of the rotary shaft 40 and connected to a clutch which will be hereinafter described. A plurality of coils 45 constituting a stator are securely mounted at a cylindrical portion 41a on one face of the stator housing 41 which extends into the motor case 38 while a heat sink 46 having fins 46a thereon is formed integrally on the other face of the stator housing 41, and a rotation detector 47 having a Hall effect element is provided in an opposing relationship to the magnet 44 of the rotary shaft 40. Though not shown clearly in the drawings, an FET (field effect transistor) connected to the controller 25 and the coils 45 described hereinabove and constituting a motor driving circuit is provided on the heat sink 46, and also the rotation detector 47 is connected to the controller.

Meanwhile, reference numeral 48 denotes a cover which is securely mounted on the stator housing 41 and covers the aforementioned FET. Vent holes 49a, 49b and 49c are formed in the cover 48, motor housing 41 and motor case 38, respectively, and the inside of the motor case 38 is ventilated as indicated by the arrows in the figure by rotation of the fan 43 so that the coils 45 are cooled.

It is to be noted that, since the electric motor 36 is disclosed in detail in Japanese Patent Application N° 1-181496 of Japanese Utility Model Application N° 2-51139 filed precedently by the present applicant for instance, description thereof is given briefly.

The transmission 37 is constituted such as a clutch chamber 39a and a transmission chamber 39b are defined in the transmission case 39 and a multiple disk type clutch 50 is disposed in the clutch chamber 39a while a transmission mechanism 51 of the parallel gear type is disposed in the transmission chamber 39b. The clutch 50 is constituted such as a driven gear 53 which is held in meshing engagement with a drive gear 52 of the rotary shaft 40 of the electric motor 36 is provided on a clutch outer member 54 while a clutch inner member 55 is securely mounted on a main shaft of the transmission mechanism 51, and pressure plates 56 supported on the clutch outer member 54 and pressure plates 57 supported on the clutch inner member 55 are engaged for alternate frictional contact with each other in an axial direction such as the pressure plates 56 and 57 are frictionally contacted with each other by axial movement (rightward movement in the figure) of a pressing member 58 connected to a clutch lever not shown to transmit power.

The transmission mecanism 51 is constituted such as a main shaft 59 and a counter shaft 60 are disposed in parallel to each other in the transmission chamber 39b such as a right end of the main shaft 59 extends into the clutch chamber 39a and the clutch inner member 55 is securely mounted at the right end of the main shaft 59 as described hereinabove while a left end of the counter shaft 60 extends outwardly of the transmission case 39 and a sprocket wheel 61 is provided at the left end of the counter shaft 60. Speed change gears 61a, 61b, 61e and 61f and a shifter 69 having speed change gears 61c and 61d formed thereon are provided corresponding to a number of speeds on the main shaft 59 while speed change gears 62a, 62c, 62d and 62f, a shifter 63 having a speed change gear 62b formed thereon and another shifter 64 having a speed change gear 62e formed thereon are provided on the counter shaft 60, and the shifters 63, 64 and 69 are held in engagement with shift forks not shown which are moved in response to a treadling operation of the speed change pedal 32. In the transmission mechanism 51, the shifters 64, 65 and 69 are selectively moved in an axial direction by a treadling operation of, the speed change pedal 32 to effect speed changing. Though not shown clearly in the figure, a chain (power transmitting mechanism) 66 is stretched between the sprocket wheel 61 and another sprocket wheel provided on an axle of the rear wheel 29. It is to be noted that reference numeral 67 denotes a vehicle speed detector, and the vehicle speed detector 67 is connected to the aforementioned controller 25.

Subsequently, operation of the present embodiment will be described.

In the electrically operated two-wheeled vehicle, an operation angle of an accelerator grip of the steering handle 15 is detected by an accelerator sensor not shown ; a speed of rotation of the rotary shaft 40 of the electric motor 36 is detected by the rotation detector 47 ; a speed of the vehicle is detected by the vehicle speed detector 67 ; and a shift position of the transmission mechanism 51 and a condition of the clutch 50 are detected by respective sensors. Then, in accordance with such detection signals, the controller 25 determines conditions of the vehicle and energizes the electric motor 36 to cause the rear wheel 29 to be driven by the electric motor 36 to drive the vehicle. Then, the controller 25 operates the electric motor 36 in a highest efficiency, for example, as described also in the precedent applications to achieve saving of the power consumption.

Meanwhile, in the electrically driven two-wheeled vehicle, the electric motor 36 is disposed at a forwardmost position in the cover 35 such that a front portion thereof is opposed to the wind introducing hole of the cover 35 so that a driving wind may collide with the electric motor 36 by way of the wind introducing hole of the cover 35. Consequently, the electric motor 36 can radiate, upon driving, the heat generated from the coils 45 or the FET by energization, and a high cooling performance can be obtained. Particularly since the fan 43 is rotated together with the rotary shaft 40 of the electric motor 36 to ventilate the inside of the motor case 38, that is, to compulsorily air cool the inside of the motor case 38, a temperature rise of the coils 45 and so forth can be prevented with certainty.

Meanwhile, in the present electrically operated two-wheeled vehicle, the power unit 31 is suspended below the main frames 13, and the batteries 68 are suspended below the power unit 31. Consequently, the power unit 31 and the batteries 68 having great weights can be disposed on a lower side with respect to the body frame 11 to achieve location of the center of gravity at a low position and obtain a high degree of driving stability.

Referring to Fig. 3 is reference numeral 90 denotes a meter box. The controller 25 is connected to the electric motor which will be hereinafter described, the battery and so forth.

Though not shown in Fig. 3 the swing arm 24 has a substantially ladder-like configuration in plan and supports the rear wheel 29 in a bilateral fashion thereon (refer to Figs. 7 and 8 ), and the rear wheel 29 is connected to a power unit 91 which will be hereinafter described by way of a wrapping connector 76 (refer to Figs. 7 and 8) such that power may be transmitted to the rear wheel 29. As shown in Figs. 7 and 8 of another embodiment which will be hereinafter described, the wrapping connector 76 is constituted such that a driven sprocket wheel 74 is securely mounted on a hub or the like of the rear wheel 29 and a chain (endless transmitting member) 75 is stretched between the driven sprocket wheel and a driving sprocket wheel of the power unit to transmit the power. It is to be noted that reference numeral 87 denotes a progressive link mechanism.

The power unit 91 is suspended at a lower portion of the main frame 11 while the batteries 68 are carried be low the power unit 91 by means of the battery frame 34. A large number of wind introducing holes 81 are formed in a front face of the cover member 35 in an opposing relationship to the power unit 91 so that a driving wind may collide with the power unit 91 by may of the wind introducing holes 81. The battery frame 34 has a substantially cage-like configuration and is suspended at a lower portion of the power unit 91.

The power unit 91 is constructed such as, as shown in Figs. 4 and 5 a housing 93 is mounted at front and rear portions thereof on the main frame 11 and an electric motor 94 is assembled in a recessed portion 93a formed on the front right side of the housing 93 ; a non-stage transmission 95 of the belt type is assembled in another recessed portion 93b formed on the front left side of the housing 93 ; and a reducing gear mechanism 96 is assembled in a further recessed portion 93c formed on the rear left side of the housing 93, and the electric motors 94, non-stage transmission 95 and reducing gear mechanism 96 are formed in an integral relationship with each other. As apparently seen in Fig. 3, the power unit 91 is mounted such that a straight line interconnecting a rotary shaft of the electric motor 94 and an output power shaft of the reducing gear mechanism extends substantially in parallel to the main frame 11 in side elevation, that is, the line may be inclined rearwardly downwards.

The electric motor 94 is constituted such as a permanent magnet 98 constituting a rotor is securely mounted on a rotary shaft 97 which extends through a bottom portion of the recessed port ion 93a into the recessed portion 93b while coils 100 constituting a stator are securely mounted on a stator member 99 which closes an opening of the recessed portion 93a, and the rotary shaft 97 is supported for rotation on the bottom portion of the recessed port ion 93a and the stator member 99. A driving pulley which will be hereinafter described is securely mounted at a left end of the rotary shaft 97 in the recesssed portion 93b and a fan 104 is securely mounted on the rotary shaft 97 adjacent the bottom portion of the recessed portion 93a while a magnet 101 having a plurality of magnetic poles for the detection of rotation is securely mounted at a right end of the rotary shaft 97. The fan 104 is located in an opposing relationship to a vent hole 105 formed in the recessed portion 93a and is rotated together with the rotary shaft 97 to send a wind from the recessed portion 93a toward the recessed portion 93b. The magnet 101 is provided in an opposing relationship to a magnetic sensitive element 102 such as a MR (magneto-resistive) element provided on the stator member 99 to constitute a rotation sensor 103 and the rotation sensor 103 detects rotation of the rotary shaft 97 and outputs a detection signal to the controller.

A cylindrical portion 99a holding the aforementioned coils 100 the reon is formed on an inner face of the stator member 99 on the recessed portion 93a side while a heat sink 99b for the radiation of heat is formed on an outer face of the stator member 99, and vent holes 99c for the ventilation of a cooling wind are formed at locations of the stator member 99 substantially same as fins of the heat sink 99b. A plurality of switching elements 106 such as FETs constituting a driving circuit for the electric motor 94 are securely mounted on the heat sink 99b, and the switching elements 106 are connected to the aforementioned controller together with the coil 100. The switching elements 106 energize the coils 100 with a pulse current of a duty factor corresponding to a PWM signal inputted from the controller.

It is to be noted that reference numeral 107 denotes a cover which is mounted on the outer face of the stator member 99 and covers the heat sink 99b, and a hole 107a for the admission of a cooling wind is formed in the cover 107. While detailed description is omitted herein, a cooling wind is admitted in from the hole 107a by rotation of the aforementioned fan 104, and the cooling wind flows through the vent holes 99c, 105 and so forth to cool the electric motor 94 and the non-stage transmission 95.

The non-stage transmission 95 is constituted such that a belt 110 is stretched between a driving pulley 108 and a driven pulley 109, and the driving pulley 108 is provided on the rotary shaft 97 of the electric motor 94 while the driven pulley 109 is provided on an input shaft 111 of the reducing gear mechanism 96. The driving pulley 108 has a fixed face 112 securely mounted on the rotary shaft 97 and a movable face 113 supported for axial movement on the rotary shaft 97, and the movable face 113 is driven by a governor mechanism 115 having a weight 114 thereon to move in an axial direction. In the driving pulley 108, the weight 114 is moved in a diametrical direction by a centrifugal force in response to a speed of rotation of the rotary shaft 97 so that the wrapping diameter of the belt 110 is varied.

The driven pulley 109 is provided on a sleeve 116 fitted for rotation on an outer periphery of the input shaft 111 and is connected to the input shaft 111 by way of a parallel arrangement of a first centrifugal clutch 117 and a second centrifugal clutch 118. The driven pulley 109 has a fixed face 119 securely mounted at a right end of the sleeve 116, a movable face 120 supported for axial movement on the sleeve 116 and a spring (not shown) for urging the movable face 120 toward the fixed face 119 side, and the movable face 120 is moved in an axial direction in response to a variation in wrapping diameter of the driving pulley 118 so that the belt wrapping diameter is varied.

The first centrifugal clutch 117 is constituted so that a clutch outer member 122 is securely mounted at a left end of the sleeve 116 while a clutch inner member 123 is provided on a clutch outer member 124 of the second centrifugal clutch 118 so that the first centrifugal clutch 117 is engaged or disengaged in response to a speed of rotation of the clutch outer member 124 of the second centrifugal clutch 118. Meanwhile, the second centrifugal clutch 118 is constituted so that the clutch outer member 124 is secured to the input shaft 111 while a clutch inner member 125 is provided on the clutch outer member 122 of the first centrifugal clutch 117 so that the second centrifugal clutch 118 is engaged or disengaged in response to a speed of rotation of the first centrifugal clutch 117.

The reducing gear mechanism 96 is constituted such as the input shaft 111 extends through a lid member 126 which closes an opening of the recessed portion 93c and is supported for rotation on the lid member 126 and a bottom portion of the recessed portion 93c, and an intermediate shaft 127 and an output power shaft 128 are supported on the bottom portion of the recessed portion 93c and the lid member 126. A gear 129 is securely mounted on the input shaft 111 and large and small gears 130 and 131 are mounted on the intermediate shaft 127 while a further gear 132 is securely mounted on the output power shaft 128, and the gear 129 is held in meshing engagement with the gear 130 while the gear 131 is held in meshing engagement with the gear 132. The output power shaft 128 extends rightwardly through and from the housing 93, and a driving sprocket wheel 133 is securely mounted at the extended end of the output power shaft 128. As described hereinabove, the chain is stretched between the driving sprocket wheel 133 and the driven sprocket wheel of the rear wheel 29 so that the driving sprocket wheel 133 is connected to the rear wheel 29 so that power may be transmitted to the latter. The reducing gear mechanism 96 reduces the speed of output power of the electric motor 94 transmitted thereto by way of the non-stage transmission 25 and transmits the power of the reduced speed to the wrapping connector 76, that is, to the rear wheel 29.

Subsequently, operation of the present embodiment will be described.

The electric motor 94 is energized with a pulse current of a duty factor corresponding to an amount of operation of an accelerator grip or the like, and power outputted from the electric motor 94 is transmitted to the rear wheel 29 by way of the reducing gear mechanism 96 and the wrapping connector 76. Here, the non-stage transmission 95 changes the speed of rotation of the rotary shaft 97 of the electric motor 94 to cause the electric motor 94 to operate in a highest efficiency. Accordingly, saving of power consumption can be achieved. It is to be noted that, a construction and control for the achievement of operation of the electric motor 94 in a highest efficiency is disclosed in Japanese Patent Application N° 2-51139 filed precedently by the present applicant.

Meanwhile, in the driving transmission 95 and electric motor 94, non-stage transmission 95 and reducing gear mechanism 96 are assembled integrally to each other as the power unit 91, and the power unit 91 is carried at a lower portion of the body frame 11 such as a straight line interconnecting the rotary shaft 97 of the electric motor 94 and the output power shaft 128 of the reducing gear mechanism 96 may be positioned substantially in parallel to the main frames 13 as viewed in side elevation. Accordingly, even a power unit 91 having a large size can be disposed effectively making use of a dead spacing below the main frame 11 and without occupying a large spacing, and also its layout is easy. Particularly since the power unit 91 of the present driving apparatus is carried with the electric motor 94 positioned forwardly, a driving wind can collide, upon driving, with the electric 94 to effectively cool it.

Further, the power unit 91 having a great weight is disposed at a lower portion of the main frame 11 while the batteries 68 which are a similar heavy weight article are disposed below the power unit 91. Accordingly, a location of the center of gravity at a low position can be achieved and a high degree of driving stability can be obtained.

A driving apparatus for an electrically operated vehicle according to another embodiment of the present ivention is shown in Figs. 6 and 7.

As shown in Fig. 6 , in the present embodiment, the power unit 91 is constituted from an electric motor 94 and a non-stage transmission 95. The power unit 91 is constituted such that the pivot shaft 23 extends for rotation through a rear portion of the housing 93 so that the rear portion of the housing 93 is supported on the pivot shaft 23, and the output power shaft 128 is formed from a cylindrical member fitted for rotation on an outer periphery of the pivot shaft 23 and coaxial with the latter. The output power shaft 128 extends at a right end thereof righwardly from the housing 93, and the driven pullet 109 of the non-stage transmission 95 is provided on the output power shaft 128 in the housing 93 by way of the sleeve 116 while the driving sprocket wheel 133 is securely mounted at the right end of the output power shaft 128 which extends outwardly from the housing 93. Similarly as in the embodiment described above, the driven pulley 109 is connected to the output power shaft 128 by way of the first centrifugal clutch 117 and the second centrifugal clutch 118.

Also in the present embodiment, the power unit 91 is carried such as the electric motor 94 is located forwardly and a straight line interconnecting the rotary shaft 97 of the electric motor 94 and the output power shaft 128 may be substantially horizontal as viewed in side elevation, that is, substantially in parallel to the main frames 13, and the power unit 91 and batteries 68 are disposed below the body frame 11. Accordingly, the layout of the power unit 91 is easy and the electric motor 94 can be cooled effectively, and also a location of the center of gravity at a low position can be achieved.

In the present embodiment, the driving sprocket wheel 133 is securely mounted on the output power shaft 128 coaxial with the pivot shaft 23 and the chain 75 is stretched between the driving sprocket wheel 73 and a driven sprocket wheel 74 of the rear wheel 29. Accordingly, even when bounding or rebounding takes place with the rear wheel 29, the distance between the driving sprocket wheel 74 is not varied, and variation in tensile force of the chain 75 can be prevented.

Fig. 8 shows a further embodiment of the present invention.

The pivot shaft 23 is constituted from two shafts 23a and 23b and the output power shaft 128 of the power unit 91 is disposed between the shafts 23a and 23b. The pivot shaft 23 is constituted so that the shafts 23a and 23b are disposed in a coaxial relationship with each other and left and right front portions of the swing arm 24 are supported on the main frame 11 by means of the shafts 23a and 23b. The power unit 91 is constituted so that the output power shaft 128 is supported on the housing 93 in a coaxial relationship with the shafts 23a and 23b, and the driving sprocket wheel 73 is securely mounted at a right end portion of the output power shaft 128 which is projected from the housing 93. It is to be noted that the other construction is similar to that of the embodiment shown in Figs. 6 and 7.

Also with the present embodiment, the layout is easy similarly to the embodiments described hereinabove, and cooling of the electric motor 94 can be performed effectively with a driving wind. Further, also a location of the center of gravity at a low position of the vehicle body can be achieved, and besides variation in tensile force of the chain 75 upon bounding or rebounding of the rear wheel 29 can be prevented.

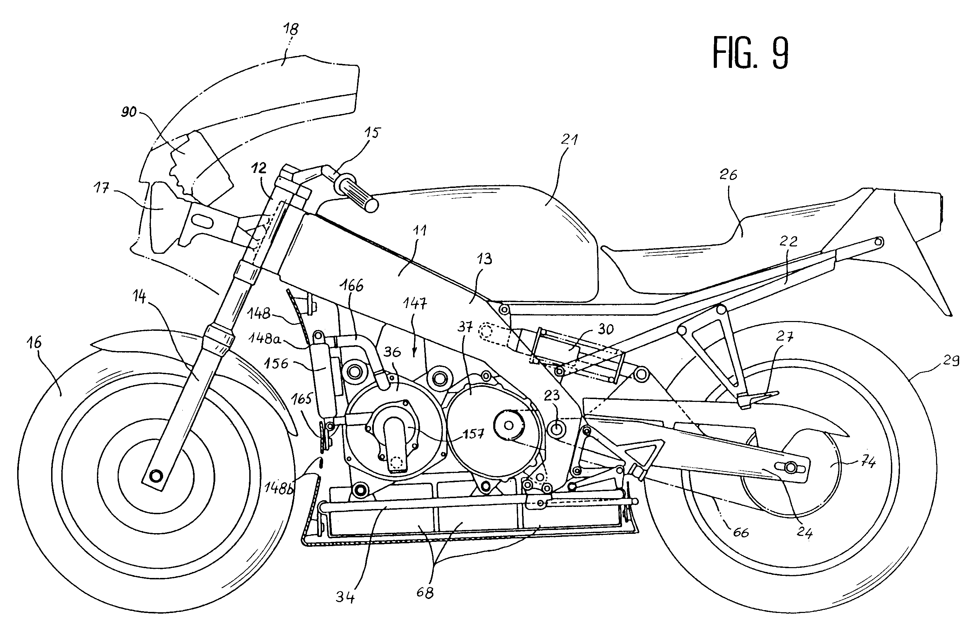

Referring to Fig. 9, a power unit 147 and the battery frame 34 are suspended on the main frame 11, and further, a cover member 148 is hung. The cover member 148 has a substantially L-shaped profile as viewed in side elevation and is mounted at a front upper portion thereof on the main frame 11 and at lower front and rear portions thereof on the battery frame 34. An opening 148a is formed in the cover member 148 in front of a radiator which will be hereinafter described, and a large number of wind introducing holes 148b are formed in the cover member 148 around the opening 148a so as to allow ventilation. The battery frame 34 is mounted at two forwardly and rearwardly spaced points on the power unit 147 and at a lower portion of the body frame 11 rearwardly of the power unit 147.

The power unit 147 is constructed generally like in the embodiment of Fig. 2 to which Fig. 8 may be compared. Like references designate like components. However, a radiator 156 is mounted at a front portion of the electric motor 36 while a water pump 157 is mounted at a left side portion of the electric motor 36. The radiator 149 is communicated with a water jacket (hereinafter described) of the electric motor 36 by way of a hose 166 and also with the water pump 157 by way of a pipe 165 and cools cooling water admitted therein from the water pump 157. It is to be noted that construction of the radiator 156 is well known and description thereof is omitted herein.

The bottomed cylindrical motor case 38 comprises an accommodating portion 38b opened leftwardly and the bottom portion of the motor case 38 is securely mounted on the transmission chamber 39. A plurality of vent holes 38c are formed in the bottom portion of the motor case 38 while a water jacket (cooling water passageway) 38a having a substantially annular section is formed in the motor case 38 in a coaxial relationship to the accommodating portion 38b. The vent holes 38c are formed in an opposing relationship to a fan which will be hereinafter described so as to allow ventilation therethrough, and when the fan rotates, a cooling wind passes through the vent holes 38c. The water jacket 38a is opened annularly to the same side as the opening of the accommodating portion 38b, and the opening thereof is closed by a stator holding member 161 which will be hereinafter described. The water jacket 38a is communicated with the radiator 156 from an inlet port formed in the stator holding member 161 so that cooling water is supplied thereto, and further, the water jacket 38a is similarly communicated with the water pump 157 from an outlet port formed in the stator holding member 161 so that cooling water is discharged therefrom.

The stator holding member 161 is securely mounted at the opening end of the motor case 159. The stator holding member 161 has a plurality of holding pieces 160b integrally formed in an equidistantly spaced relationship in a circumferential direction projectingly on an inner face of a lid portion 160a having a substantially disk-like configuration, and the lid portion 160a closes the opening of the accommodating portion 38b and the opening of the water jacket 38a of the motor case 38. The coils 45 constituting a stator are securely mounted on the individual holding pieces 160b. A plurality of vent holes 161a are formed in the lid portion 160a on the center side with respect to the holding pieces 43b, and an inlet port 160i and an outlet port 160o are formed at locations of the lid portion 160a corresponding to the opening of the water jacket 38a so that they are opened to the water jacket 38a. The vent holes 161a are formed in an opposing relationship to the coils 45 so as to allow ventilation, and when the fan rotates, a cooling wind passes through the vent holes 161a. The inlet port 160i is connected to the hose 166 so that it is communicated with the radiator 156 by way of the hose 166 while the outlet port 160o is communicated with the radiator 156 by way a pipe 199.

The rotary shaft 40 leftwardly and rightwardly through the stator holding member 161 and the bottom portion of the motor case 38, and the left end thereof is connected to the water pump 157.

The water pump 157 is constituted such that a pump case 171 is mounted on an outer edge portion of an outer periphery of the stator holding member 161 by means of a bracket 174 such that a central portion thereof is spaced from the outer face of the stator holding member 161, and a spacing 173 is defined between the pump case 171 and the stator holding member 161. The spacing 173 is communicated with the atmospheric air by way of a hole or the like not shown formed in the bracket 174, and the aforementioned vent holes 161a are opened to the spacing 173.

The pump case 171 has a pump chamber 179, a water sucking passageway 176, a water sending passageway 177 and a supporting hole 178 defined therein, and a rotary shaft 172 extends in the supporting hole 178 in a coaxial relationship to the rotary shaft 40 of the electric motor 36. The rotary shaft 172 is connected at a right end thereof to the rotary shaft 40 and extends at a left end thereof into the pump chamber 175, and blades 179 are securely mounted at the left end of the rotary shaft 172. The water sucking passageway 176 extends in a radial direction and is opened at an inner end thereof to a central portion of the pump chamber 179 while it is communicated at an outer end thereof with the outlet port 160o of the water jacket 38a by way of the pipe 199 mentioned hereinabove. Similarly, the water sending passageway 177 extends in a radial direction and is communicated at an inner end thereof with an outer peripheral portion of the pump chamber 175 while it is communicated at an outer end thereof with the radiator by way of the pipe 165. The water pump 157 is driven by the electric motor 36 so that the blades are rotated to send out cooling water from within the water jacket 38a of the electric motor to the radiator 156.

A pressing member 190 is connected to a lever not shown and puts the clutch plates 68 and 69 in frictional engagement.

The chain 66 is stretched between the driving sprocket wheel 61 and the driven sprocket wheel 74 of the aforementioned rear wheel 29 so that the driving sprocket wheel 61 and the driven sprocket wheel 74 are interconnected for power transmission by way of the chain 66.

The electric motor 36 is energized and power outputted from the electric motor 36 is changed in speed by the transmission 37, and power is transmitted from the transmission 37 to the rear wheel 29 to drive the electrically operated two-wheeled vehicle. Here, during energization of the electric motor 36, the water pump 157 is driven by the electric motor 36, and the water pump 157 circulates cooling water so that cooling water in the water jacket 38a is flowed into and cooled by the radiator 156 and then the cooling water cooled by the radiator 156 is flowed into the water jacket 38a to cool the motor case 38. Further, in this instance, the fan 43 is rotated integrally with the rotary shaft 40 so that a cooling wind is flowed through the vent holes 161a into the motor case 38 and is discharged through the motor case 38 and is discharged through the vent holes 38c to cool the coils 45 and so forth. Accordingly, even when a comparatively high current is supplied to the coils 45 to generate a great amount of heat, the electric motor 36 can be cooled effectively and a temperature rise of the electric motor 36 can be restricted.

Further, in the electric motor 36 of the present embodiment, the water jacket 38a is opened to the same side as the accommodating portion 38b, and further, the water jacket 38a is formed in such a shape that it has a substantially equal section in the opening direction, that is, in a shape which facilitates removal from a die while the opening of the water jacket 38a is closed watertight by the stator holding member 161. Accordingly, the motor case 38 can be shaped readily by casting or the like.

According to a not shown embodiment which is however of interest, the batteries can also be accommodated over the electric motor 94, in the dead spacing between the main frames 13, possibly in a box secured to brackets securely mounted on inner faces of the main frames.

## Claims

1. An electrically operated saddle type vehicle, wherein a front wheel (16) is supported on a front wheel supporting member (14) mounted on a head tube (12) at a front portion of a body frame (11) while a rear wheel (29) is supported on a rear wheel supporting member (24) mounted at a rear portion of said body frame (11), and an electric motor (36) is located between a mounting portion of said front wheel supporting member and said rear wheel supporting member so that a front portion thereof is opposed to said front wheel, the electric motor is connected to a driving wheel which is at least one of said front and rear wheels by way of a power transmitting mechanism comprising a wrapping connector for transmitting the power of the electric motor to said driving wheel to drive it, characterised in that the transmitting mechanism also comprises a transmission (95) for changing the speed of rotation of said electric motor (94), said electric motor and said transmission are assembled integrally to each other and suspended from a pair of left and right main frames (13) of the body frame securely mounted at front ends on the head tube (12) and which extend obliquely, being lower rearwardly, said electric motor extends below the main frame, and said electric motor and transmission are disposed so that a straight line interconnecting a rotary shaft of said electric motor and an output power shaft (128) of said transmission extends substantially in parallel to said body frame as viewed in side elevation.

2. An electrically operated vehicle according to claim 1, characterized in that a swing arm (24) is mounted for rocking motion around a pivot shaft and said driving wheel (29) is supported on said swing arm, and said output power shaft (128) of said transmission and said pivot shaft are disposed in a coaxial relationship to each other and a driving wheel (133) of said wrapping connector is securely mounted on said output power shaft of said transmission.

3. An electrically operated vehicle according to any one of claims 1 to 2, characterized in that it comprises a cooling water passageway (38a, 176, 177) provided for said electric motor, and a pump (157) for supplying cooling water to said cooling water passageway.

4. An electrically operated vehicle according to any one of claims 1 to 3, characterized in that said electric motor is of the compulsive air cooling type having a fan built therein.

5. An electrically operated vehicle according to claim 1, wherein the transmission is a non-stage transmission.

6. An electrically operated vehicle according to claim 1, wherein the transmission is a gear box.

7. An electrically operated vehicle according to claim 1, characterized in that it comprises batteries (68) located below the assembly composed of the motor and the transmission.

8. An electrically operated vehicle according to claim 7, characterized in that the batteries are suspended from the assembly.

9. An electrically operated vehicle according to claim 1, characterized in that it comprises batteries (68) located over the electrical motor and between the main frames (13).

## Patentansprüche

1. Elektrisch betriebenes Fahrzeug vom Satteltyp, wobei ein Vorderrad (16) von einem Vorderrad-Trägerelement (14) getragen wird, das an einem Kopfrohr (12) an einem vorderen Abschnitt eines Karosserierahmens (11) angebracht ist, während ein Hinterrad (29) von einem Hinterrad-Trägerelement (24) getragen wird, das an einem hinteren Abschnitt des Karosserierahmens (11) angebracht ist, und ein Elektromotor (36) zwischen einem Anbringungsabschnitt des Vorderrad-Trägerelementes und dem Hinterrad-Trägerelement angeordnet ist, so daß ein vorderer Abschnitt desselben dem Vorderrad gegenüberliegt, wobei der Elektromotor mit einem Antriebsrad, das wenigstens entweder das Vorderrad oder das Hinterrad ist, über einen Kraftübertragungsmechanismus verbunden ist, der ein umlaufendes Verbindungselement umfaßt, um die Kraft des Elektromotors auf das Antriebsrad zu übertragen und es anzutreiben, **dadurch gekennzeichnet**, daß der Übertragungsmechanismus des weiteren ein Getriebe (95) zur Veränderung der Drehzahl des Elektromotors (94) umfaßt, wobei der Elektromotor und das Getriebe als Einheit zusammengebaut sind und an einem aus einem linken und einem rechten Hauptrahmen (13) des Karosserierahmens bestehenden Paar aufgehängt sind, die fest an vorderen Enden des Kopfrohrs (12) angebracht sind, und die sich schräg erstrecken, wobei sie hinten niedriger sind, wobei sich der Elektromotor unterhalb des Hauptrahmens erstreckt, und der Elektromotor und das Getriebe so angeordnet sind, daß eine gerade Linie, die eine Drehwelle des Elektromotors und eine Kraftabtriebswelle (128) des Getriebes miteinander verbindet, von der Seite gesehen, im wesentlichen parallel zu dem Karosserierahmen verläuft.

2. Elektrisch betriebenes Fahrzeug nach Anspruch 1, **dadurch gekennzeichnet**, daß ein Schwingarm (24) um eine Gelenkwelle schwingend angebracht ist, und das Antriebsrad (29) von dem Schwingarm getragen wird, und die Kraftabtriebswelle (128) des Getriebes und die Gelenkwelle koaxial zueinander angeordnet sind, und ein Antriebsrad (133) des umlaufenden Verbindungselementes fest an der Kraftabtriebswelle des Getriebes angebracht ist.

3. Elektrisch betätigtes Fahrzeug nach einem der Ansprüche 1 bis 2, **dadurch gekennzeichnet,** daß es einen Kühlwasserkanal (38a,176,177) für den Elektromotor sowie eine Pumpe (157) umfaßt, die dem Kühlwasserkanal Kühlwasser zuführt.

4. Elektrisch betätigtes Fahrzeug nach einem der Ansprüche 1 bis 3, **dadurch gekennzeichnet,** daß der Elektromotor vom Zwangsluftkühlungstyp mit einem eingebauten Gebläse ist.

5. Elektrisch betätigtes Fahrzeug nach Anspruch 1, wobei das Getriebe ein stufenloses Getriebe ist.

6. Elektrisch betätigtes Fahrzeug nach Anspruch 1, wobei das Getriebe ein Schaltgetriebe ist.

7. Elektrisch betätigtes Fahrzeug nach Anspruch 1, **dadurch gekennzeichnet,** daß es Batterien (68) umfaßt, die unterhalb der aus dem Motor und dem Getriebe bestehenden Baugruppe angeordnet sind.

8. Elektrisch betätigtes Fahrzeug nach Anspruch 7, **dadurch gekennzeichnet,** daß die Batterien an der Baugruppe aufgehängt sind.

9. Elektrisch betätigtes Fahrzeug nach Anspruch 1, **dadurch gekennzeichnet,** daß es Batterien (68) umfaßt, die über dem Elektromotor und zwischen den Hauptrahmen (13) angeordnet sind.

## Revendications

1. Véhicule de type à selle, actionné électriquement, dans lequel une roue avant (16) est montée sur un organe de support de roue avant (14) monté sur un tube de tête (12), sur une partie avant d'un châssis de carrosserie (11), tandis qu'une roue arrière (29) est montée sur un organe de support de roue arrière (24) monté sur une partie arrière dudit châssis de carrosserie (11), et un moteur électrique (36) est situé entre une partie de montage dudit organe de support de roue avant et ledit organe de support de roue arrière, de manière que sa partie avant soit face à ladite roue avant, le moteur électrique est connecté à une roue d'entraînement qui est au moins l'une desdites roues avant et arrière, au moyen d'un mécanisme de transmission de puissance comprenant un connecteur enveloppant pour transmettre la puissance du moteur électrique à ladite roue d'entraînement afin de l'entraîner, caractérisé en ce que le mécanisme de transmission comprend également une transmission (95) pour changer la vitesse de rotation dudit moteur électrique (94), ledit moteur électrique et ladite transmission sont assemblés d'un seul tenant entre eux et suspendus à un couple de châssis principaux gauche et droit (13) du châssis de carrosserie, montés rigidement aux extrémités avant au tube de tète (12) et s'étendant obliquement en étant plus bas à l'arrière, ledit moteur électrique s'étend au-dessous du châssis principal, et ledit moteur électrique et la transmission sont disposés de manière qu'une ligne droite interconnectant un arbre rotatif dudit moteur électrique et un arbre de puissance de sortie (128) de ladite transmission s'étende sensiblement parallèlement audit châssis de carrosserie comme observé en vue de côté.

2. Véhicule actionné électriquement selon la revendication 1, caractérisé en ce qu'un bras oscillant (24) est monté pour effectuer un mouvement de bascule autour d'un arbre de pivotement et ladite roue d'entraînement (29) est montée sur ledit bras oscillant, et ledit arbre de puissance de sortie (128) de ladite transmission et ledit arbre de pivotement sont disposés coaxialement l'un par rapport à l'autre et une roue d'entraînement (133) dudit connecteur enveloppant est montée rigidement sur ledit arbre de puissance de sortie de ladite transmission.

3. Véhicule actionné électriquement selon l'une quelconque des revendications 1 à 2, caractérisé en ce qu'il comprend un passage d'eau de refroidissement (38a, 176, 177) destiné audit moteur électrique, et une pompe (157) pour fournir de l'eau de refroidissement audit passage d'eau de refroidissement.

4. Véhicule actionné électriquement selon l'une quelconque des revendications 1 à 3, caractérisé en ce que ledit moteur électrique est de type à refroidissement forcé à l'air ayant un ventilateur intégré en son sein.

5. Véhicule actionné électriquement selon la revendication 1, dans lequel la transmission est une transmission continue.

6. Véhicule actionné électriquement selon la revendication 1, dans lequel la transmission est une boîte de vitesses.

7. Véhicule actionné électriquement selon la revendication 1, caractérisé en ce qu'il comprend des batteries (68) situées au-dessous de l'ensemble composé du moteur et de la transmission.

8. Véhicule actionné électriquement selon la revendication 7, caractérisé en ce que les batteries sont suspendues à l'ensemble.

9. Véhicule actionné électriquement selon la revendication 1, caractérisé en ce qu'il comprend des batteries (68) situées sur le moteur électrique et entre les châssis principaux (13).
